# EUROPEAN PATENT SPECIFICATION

(11) **EP 4 208 371 B1**
(45) Date of publication and mention of the grant of the patent: **16.10.2024**
(21) Application number: 21772762.7
(22) Date of filing: 01.09.2021
(51) Int. Cl.: B60P 3/22, B65D 90/02

(54) **FOOD PRODUCTS TANK**
BEHÄLTER FÜR LEBENSMITTEL
RÉSERVOIR DE PRODUITS ALIMENTAIRES

(30) Priority: 04.09.2020 IT 202000021043
(43) Date of publication of application: 12.07.2023
(73) Proprietor: Lucertini, Mirko, 61030 Colli Al Metauro (PU) (IT)
(72) Inventor: Lucertini, Mirko, 61030 Colli Al Metauro (PU) (IT)
(74) Representative: Baldi, Claudio
(86) International application number: PCT/EP2021/074126
(87) International publication number: WO 2022/049121

(56) References cited:
- JP-A- 2007 153 404
- JP-B2- 4 410 917
- US-A- 3 860 018
- US-A1- 2015 307 731
- US-A1- 2019 084 468

## Description

The present invention relates to a tank for containing food products, in particular liquid products.

In particular, the field of reference is the field of the tanks that are mounted on truck trailers and are suitable for containing liquid food products such as, for example, milk, wine, oils, fruit juices, cream, molasses and the like.

A conventional cistern has an elliptical or circular cross-section and comprises:
- an external surface,
- an internal surface,
- a compartment,
- an inlet for the introduction of liquid food products into the compartment, and
- an outlet for discharging the liquid food product from the compartment; the outlet is typically disposed in lower position with respect to the inlet and preferably at the bottom of the tank.

As it is well known, after a single transportation or even after a small number of transportations, a tank must necessarily be washed, either to change the liquid food product that is contained inside the tank, or for pure hygienic necessity. In the case of a milk tank, once the milk has been unloaded, the tank must necessarily be washed immediately, before refilling it with milk, since acid residues may adhere on the internal surface (facing the compartment) of the tank, which may contaminate and damage the next load.

Other food products, such as molasses or chocolate, may permanently adhere to the internal surface of the tank due to viscosity, and may damage the newly loaded products over time.

Therefore, the washing of the tank is a necessary operation in order to avoid the contamination of the transported liquids.

The washing of the tank must be carried out in authorized washing centers that are equipped with appropriate washing systems and devices. Once the treatment has been completed, the cleaning centers will issue a document or certificate with reference to the cleaning of the tank, wherein the type of treatment carried out is described.

The fact that the tank is obliged to travel to the authorized washing center is inconvenient both in terms of time and money.

In particular, the time and costs necessary for a complete cleaning operation of a conventional tank amount to about 1-2 hours, and to about € 120 - 150 per wash. Moreover, if you add the distance that is to be covered to reach said authorized washing centers, the amount of time and the costs are even higher. To date, the cost in 10 years for the washing of a conventional tank is estimated at about € 150000. Such a waste of time and money for the cleaning of a single tank is extremely inconvenient for a transportation company.

JP2007153404A discloses a tank for containing and transporting food products, according to the preamble of claim 1.

US2015/307731 A1 discloses the use of hydrophobic coating surfaces made from hydro-oleophobic nanometric particles.

US3860018A discloses a method for cleaning a milk tank.

The present invention has been conceived from the careful observation of the problems deriving from the need to wash and sanitize the internal surface of the tank frequently so that no contaminating residues remain inside the compartment. The problem addressed and solved by the inventor arises from the need to frequently wash the tanks.

The purpose of the present invention is to overcome the drawbacks of the prior art by devising a tank for liquid food products in which it is no longer necessary to wash the tank in authorized washing centers, thus considerably reducing the costs and the time necessary for washing the tank.

These purposes are achieved according to the invention with the characteristics of the appended independent claim 1.

Advantageous embodiments appear from the dependent claims.

The tank according to the invention is defined by claim 1.

For the sake of clarity, the description of the tank according to the invention continues with reference to the attached drawings, which have a merely illustrative, not limiting value, wherein:
Fig. 1 is a diagrammatic side view of a tank according to the invention mounted on a trailer of a truck; and
Fig. 2 is a cross-sectional view of the tank taken along the sectional plane A-A of Fig. 1.

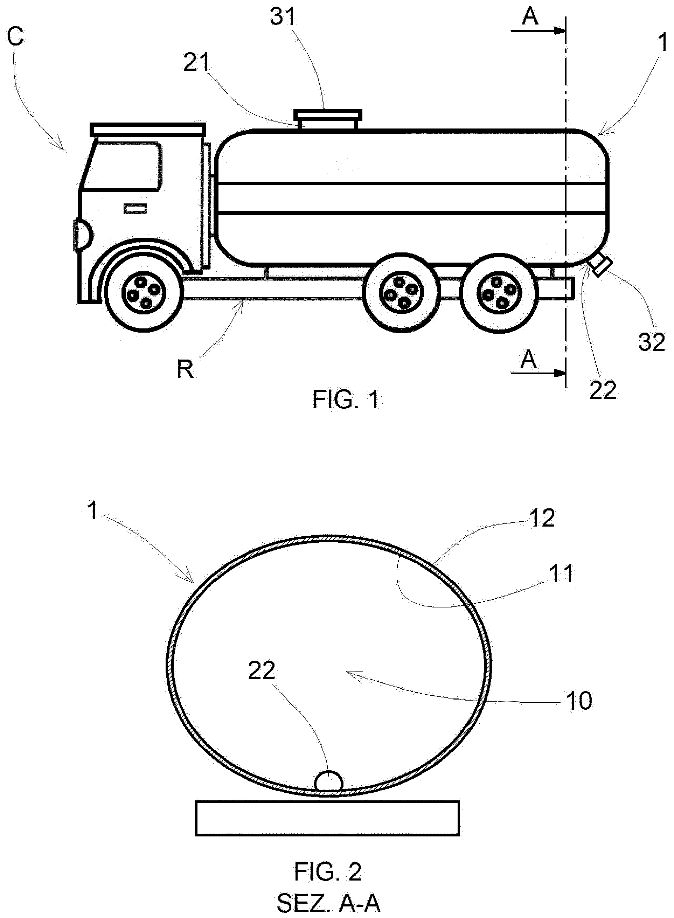

With reference to Figs. 1 and 2, a tank according to the invention is disclosed, which is generally indicated with reference numeral 1.

The tank (1) is suitable for being mounted on a trailer (R) of a truck (C). The tank (1) comprises:
- an external surface (12),
- an internal surface (11),
- an internal compartment (10),
- an inlet (21) for loading food products in the compartment (10); and
- an outlet (22) for discharging the food products from the compartment (10); said outlet (22) is disposed in lower position with respect to the inlet (21) and is disposed on the bottom of the tank (1).

The inlet (21) and the outlet (22) preferably have a circular or elliptical section.

Advantageously, the bottom of the tank (1) has an inclination such that it is slightly sloping towards the outlet (22) so as to convey the liquid food products stored inside the compartment (10), towards the outlet (22).

The tank (1) also comprises:
- first closing/opening means (31) that can be alternately disposed in a closing position, wherein said first closing/opening means (31) close said inlet (21), and in an opening position, wherein said first closing/opening means (31) do not close said inlet (21), and
- second closing/opening means that can be alternately disposed in a closing position, wherein said second closing/opening means (32) close said outlet (22), and in an opening position, wherein said second closing/opening means (32) do not close said outlet (22).

According to the preferred embodiment shown in the appended figures, the first closing/opening means (31) comprise a door hinged to the tank (1) in correspondence with the inlet (21), and the second closing/opening means (32) comprise a door hinged to the tank (1) in correspondence with the outlet (22).

Moreover, locking means are provided between said doors and said inlet/outlet (21, 22) to allow for a stable locking of the doors in the closing position.

Additionally, gaskets are provided between each door and the corresponding inlet/outlet (21, 22) to allow for a watertight closure of the inlet/outlet (21, 22).

Although not shown in the appended figures, valves may be provided in correspondence with said inlet/outlet (21, 22) to allow or prevent the passage of the liquid food product through the inlet/outlet (21, 22).

The peculiarity of the tank (1) according to the invention is that the internal surface (11) comprises a hydro-oleic phobic surface layer.

The provision of the hydro-oleophobic surface layer makes the internal surface (11) of the tank (1) easily cleanable, as the particles of the liquid food product do not adhere the surface, and are repelled.

Specifically, the term "hydro-oleic phobic" refers to the property of the surface that makes the drops of liquid food products, such as water or oils, slide off the surface, without adhering to it.

In particular, the hydro-oleophobic surface layer is obtained by means of a nanotechnological process. Therefore, the hydro-oleophobic surface layer comprises hydro-oleophobic nanometric particles. The nanometric particles have a molecular size such that they bind at the molecular level to the internal surface (11), in particular to the stainless steel that is commonly used to make a conventional tank (1).

In a preferred embodiment of the invention said hydro-oleophobic nanometric particles are applied to the internal surface (11) by means of coating; such a process is also commonly known as nanocoating. Specifically, the application is made by spraying a nanotechnology liquid or gel applied to the internal surface (11) of the tank (1).

The nanoparticles do not mechanically adhere to the surface, but are bound to the surface with metal-oxygen-metal chemical bonds, and moreover they generate a force that repels the liquid food product stored inside the compartment.

Alternatively, said hydro-oleophobic surface layer comprises a film of nanometric hydro-oleophobic particles that entirely covers the internal surface (11).

Of course, the hydro-oleophobic surface layer must be composed of molecules, particles, and elements that are not harmful to humans.

By way of example, such a hydro-oleophobic surface layer comprises silica or silicon or silicon dioxide and non-toxic additives that make the hydro-oleophobic surface layer inert towards the liquid food product stored inside the compartment (10), thus ensuring that the liquid food product is not harmful to humans.

The applicant has decided to opt for a hydro-oleophobic surface layer with nanoparticles after carrying out numerous tests which have shown that a hydro-oleophobic surface layer with the aforementioned nanoparticles is preserved for a much longer time and is much more efficient than other coating layers made, by way of example, with plastic copolymers.

In particular, the applicant has preferred to use nanotechnological products marketed by the company Nanobiotech ^{®} to treat the internal surface (11) of the tank (1). It should be noted, however, that similar nanotechnological products having the peculiarity of making surfaces water-repellent are available on the market and are marketed by other companies.

These products are inert to liquid food products, that is to say do not react with food and do not leave particles inside the liquid that are harmful to humans. In view of the above, when the liquid food product is discharged from the tank, the particles do not remain adhered to the internal surface (11) and slide off out of the compartment.

The use of this hydro-oleophobic layer with hydro-oleophobic nanoparticles provides several advantages.

In particular, when the tank (1) is discharged, the liquid food product stored in the compartment (10) of the tank (1) will almost completely slide out of the outlet (22) because the particles of the liquid food product are repelled by the hydro-oleophobic nanoparticles of the hydro-oleophobic surface layer.

The internal surface of the inlet/outlet, the external surface of the doors and the external surface of the valves disposed in correspondence with the inlet/outlet (21, 22) may comprise the aforementioned hydro-oleophobic layer with hydro-oleophobic nanoparticles.

All the surfaces of the tank (1) that will come into contact with the food product stored in the compartment may have the aforementioned hydro-oleophobic layer.

Therefore, after unloading the liquid food product, the tank (1) is immediately ready for the next load of liquid food product, or in the worst case it must be rinsed with a small amount of water, which invests and carries away with it the few particles and molecules of liquid food product that remain on the bottom of the tank (1) towards the outlet.

Such a solution is cheaper and faster than the cleaning solution of the prior art. In particular, the applicant has estimated that a hydro-oleophobic surface layer with hydro-oleophobic nanometric particles maintains its hydro-oleo repellent characteristics for about five years and has a total cost for the treatment of about € 3,000 - € 4,000. Therefore, in ten years, the cost to maintain the tank (1) clean and internally sanitized amounts to approximately € 8,000, to which the costs of the water for the fast rinses that amount to approximately € 2,000 - € 4,000 in a year must be added, for a total cost of € 10,000 - € 12,000. Comparing these costs with the costs for the cleaning of the tank of the prior art, which amount to approximately € 150000 in ten years, it is evident that such a solution is extremely more economic and convenient.

Furthermore, the present invention is an environmentally friendly solution that protects the environment since, whereas previously the residues that adhered to the internal surface of the tank according to the prior art had to be disposed of as waste by the washing centers, now thanks to the present invention such waste is eliminated or minimized because the liquid or product is totally or almost totally expelled from the tank compartment during unloading.

Although it has been assumed that the tank (1) is always used for the transportation of liquid food products, the tank (1) can be used for different purposes, for example for the storage and the transportation of any type of liquid, such as inert liquids or liquid fuels such as diesel or gasoline.

Moreover, although reference has been made to the use of the tank for containing liquids, said tank can also be used to contain other products, such as flour or similar products (such as in the case of silos). In this case, the hydro-oleophobic layer considerably facilitates and speeds up the internal cleaning of the tank.

A further object of the present invention is a trailer (R) suitable for being transported by a truck (C), whereon a tank (1) such as the one described above is mounted.

Numerous variations and modifications may be made to the present embodiment of the invention, within the scope of a person skilled in the art, but in any case within the scope of the invention as expressed by the appended claims.

By way of example, even if in the above description reference is made to a tank (1) comprising a single internal compartment (10), the tank may also be of the "multi-compartment" type and may therefore comprise a plurality of compartments, each one of them with its own inlet and outlet.

Furthermore, although the tank (1) is always shown and described mounted on a trailer (R) towed by a truck (C), the tank (1) may also be an integral part of a conventional tank truck.

The hydro-oleophobic layer with nano-particles can be applied both in existing conventional tanks (1), and it can be also applied in sheet metal that is used for the construction of new tanks (1) after the calendering process.

## Claims

1. Tank (1) for food products comprising: an external surface (12), an internal surface (11), a compartment (10), an inlet (21)for loading food products in the compartment (10), at least one outlet (22) for discharging the food products from the compartment (10), first closing/opening means (31) that can be alternately disposed in a closing position, wherein said first closing/opening means (31) close said inlet (21), and an opening position, wherein said first closing/opening means (31) do not close said inlet (21), and second closing/opening means that can be alternately disposed in a closing position, wherein said second closing/opening means (32) close said outlet (22), and an opening position, wherein said second closing/opening means (32) do not close said outlet (22);
wherein said internal surface (11) of the tank (1) comprises a hydro-oleophobic surface layer,
**characterized in that** said hydro-oleophobic surface layer comprises nanometric hydro-oleophobic particles; and
said first closing/opening means (31) comprise a door that is hinged to the tank (1) in the inlet (21);
said second closing/opening means (32) comprise a door that is hinged to the tank (1) in the outlet (22).

2. The tank (1) of claim 1, wherein said particles are applied on the internal surface (11) by means of a nebulized nanotechnological liquid or gel.

3. The tank (1) of claim 1, wherein said hydro-oleophobic surface layer comprises a film of nanometric hydro-oleophobic particles; said film of nanometric particles covering said internal surface (11) of the tank (1) completely.

4. The tank (1) of anyone of the preceding claims, comprising blocking means to firmly block the doors of the first closing/opening means (31) and of the second closing/opening means (32) in closing position when said doors close the inlet/outlet (21, 22).

5. The tank (1) of any one of the preceding claims, comprising gaskets between each door and the inlet/outlet (21, 22).

6. Trailer (R) comprising a tank (1) according to any one of claims 1 to 5.

## Patentansprüche

1. Tank (1) zur Aufnahme von Lebensmittelprodukten, umfassend: eine Außenoberfläche (12), eine Innenoberfläche (11), einen Innenraum (10), eine Einlassöffnung (21) zum Beladen des Innenraums (10) mit Lebensmittelprodukten, mindestens eine Auslassöffnung (22) zum Entladen der Lebensmittelprodukte aus dem Innenraum (10), erste Schließ- und Öffnungsmittel (31), die alternativ in einer Schließposition, in der die ersten Schließ- und Öffnungsmittel (31) die Einlassöffnung (21) verschließen, und in einer Öffnungsposition angeordnet werden können, in der die ersten Schließ- und Öffnungsmittel (31) die Einlassöffnung (21) nicht verschließen, und zweite Schließ- und Öffnungsmittel, die alternativ in einer Schließposition, in der die zweiten Schließ- und Öffnungsmittel (32) die Auslassöffnung (22) verschließen, und in einer Öffnungsposition angeordnet werden können, in der die zweiten Schließ- und Öffnungsmittel (32) die Auslassöffnung (22) nicht verschließen;
wobei die Innenoberfläche (11) des Tanks (1) eine öl- und wasserabweisende Oberflächenschicht umfasst,
**dadurch gekennzeichnet, dass** die öl- und wasserabweisende Oberflächenschicht öl- und wasserabweisende nanometrische Partikel umfasst; und
wobei die ersten Schließ- und Öffnungsmittel (31) eine Tür umfassen, die an dem Tank (1) in der Einlassöffnung (21) angeschlagen ist;
wobei die zweiten Schließ- und Öffnungsmittel (32) eine Tür umfassen, die an dem Tank (1) in der Auslassöffnung (22) angeschlagen ist.

2. Tank (1) nach Anspruch 1, wobei die Partikel auf der Innenoberfläche (11) mittels einer zerstäubten, nanotechnologischen Flüssigkeit oder eines Gels aufgebracht werden.

3. Tank nach Anspruch 1, wobei die öl- und wasserabweisende Oberflächenschicht einen Überzug aus nanometrischen öl- und wasserabweisenden Partikeln umfasst; wobei der Überzug aus nanometrischen Partikeln die Innenoberfläche (11) des Tanks (1) vollständig bedeckt.

4. Tank (1) nach einem der vorstehenden Ansprüche, umfassend Sperrmittel, um die Türen der ersten Schließ- und Öffnungsmittel (31) und der zweiten Schließ- und Öffnungsmittel (32) fest in der Schließposition zu verschließen, wenn die Türen die Einlass-/ Auslassöffnung (21, 22) ausfachen.

5. Tank (1) nach einem der vorstehenden Ansprüche, umfassend Dichtungen zwischen jeder Tür und der jeweiligen Einlass-/ Auslassöffnung (21, 22).

6. Anhänger (R), umfassend einen Tank (1) nach einem der Ansprüche 1 bis 5.

## Revendications

1. Citerne (1) pour les produits alimentaires comprenant une surface externe (12), une surface interne (11), un compartiment (10), une ouverture d'entrée (21) pour le chargement à l'intérieur du compartiment (10) des produits alimentaires, au moins une ouverture de sortie (22) pour le déchargement des produits alimentaires depuis le compartiment (10) ; des premiers moyens de fermeture/ouverture (31) qui peuvent assumer alternativement une position de fermeture, où lesdits premiers moyens de fermeture/ouverture (31) ferment ladite ouverture d'entrée (21) et une position d'ouverture, où lesdits premiers moyens de fermeture/ouverture (31) ne ferment pas ladite ouverture d'entrée (21) ; et des seconds moyens de fermeture/ouverture qui peuvent assumer alternativement une position de fermeture, où lesdits seconds moyens de fermeture/ouverture (32) ferment ladite ouverture de sortie (22) et une position d'ouverture, où lesdits seconds moyens de fermeture/ouverture (32) ne ferment pas ladite ouverture de sortie (22) ;
où ladite surface interne (11) de la citerne (1) comprend une couche superficielle hydro-oléophobique,
**caractérisée en ce que** ladite couche superficielle hydro-oléophobique comprend des particules nanométriques hydro-oléophobiques ; et
lesdits premiers moyens de fermeture/ouverture (31) comprennent un portillon pivoté à la citerne (1) en correspondance de l'ouverture d'entrée (21) ;
lesdits seconds moyens de fermeture/ouverture (32) comprennent un portillon pivoté à la citerne (1) en correspondance de l'ouverture de sortie (22).

2. Citerne (1) selon la revendication 1, où lesdites particules sont appliquées sur la surface interne (11) moyennant un liquide ou un gel nanotechnologique nébulisé.

3. Citerne (1) selon la revendication 1, où ladite couche superficielle hydro-oléophobique comprend un film de particules nanométriques hydro-oléophobiques ; ledit film de particules nanométriques revêtant entièrement ladite surface interne (11) de la citerne (1).

4. Citerne (1) selon l'une quelconque des revendications précédentes, comprenant des moyens de blocage qui permettent le blocage stable des portillons des premiers moyens de fermeture/ouverture (31) et des seconds moyens de fermeture/ouverture (32) en position de fermeture, c'est-à-dire lorsque lesdits portillons tamponnent les ouvertures (21, 22).

5. Citerne (1) selon l'une quelconque des revendications précédentes, comprenant des étanchéités entre chaque portillon et l'ouverture (21, 22) correspondante.

6. Remorque (R) comprenant une citerne (1) selon l'une quelconque des revendications de 1 à 5.
